# DEMANDE DE BREVET EUROPEEN

(11) **EP 0 882 506 A1**
(43) Date de publication de la demande: **09.12.1998**
(21) Numéro de dépôt: 98401227.8
(22) Date de dépôt: 20.05.1998
(51) Int. Cl.: B01J 37/02

(54) **Procédé de fabrication d'un convertisseur catalytique à base d'oxydes**

(30) Priorité: 22.05.1997 FR 9706273
(71) Demandeur: ECIA - EQUIPEMENTS ET COMPOSANTS POUR L'INDUSTRIE AUTOMOBILE, F-25400 Audincourt (FR)
(72) Inventeur: Sarda, Christian Jean, 25700 Valentigney (FR)
(74) Mandataire: Le Guen, Gérard

(57) **Abrégé**

L'invention fournit un procédé pour la fabrication d'un convertisseur catalytique de gaz d'échappement de véhicules automobiles du type comprenant le revêtement d'un support, par imprégnation, séchage et traitement thermique, avec au moins une couche contenant un ou plusieurs oxyde(s) métallique(s) actif(s).

Ce procédé comprend la préparation d'un milieu d'imprégnation comprenant au moins un précurseur d'oxyde métallique dans un solvant contenant au moins un solvant organique et l'imprégnation du support à l'aide du milieu d'imprégnation précité.

L'invention s'applique plus particulièrement au traitement des gaz d'échappement de véhicules automobiles.

## Description

La présente invention concerne un procédé de fabrication d'un convertisseur catalytique notamment de gaz d'échappement de véhicules automobiles.

Pour limiter la pollution de l'air à laquelle contribuent notamment les gaz d'échappement, il est connu d'agencer des convertisseurs catalytiques dans les lignes d'échappement de véhicules automobiles, permettant de réduire la quantité de substances nocives émise dans l'atmosphère.

Ces convertisseurs sont généralement constitués d'un support en céramique ou métallique et d'une phase catalytique comprenant le plus souvent des métaux précieux ou d'autres matières actives, déposées à la surface du support éventuellement par l'intermédaire d'une couche d'interface couramment dénommée dans la technique "wash-coat".

Ces convertisseurs agissent en transformant les composés polluants tels que le monoxyde de carbone, les hydrocarbures imbrûlés et les oxydes d'azote (NOₓ), en substances non nocives avant rejet dans l'atmosphère.

D'une manière générale, la fabrication des convertisseurs comprend l'élaboration du support, le dépôt d'une couche de matériau à grande surface spécifique, l'imprégnation de ce support revêtu dans un milieu d'imprégnation contenant des précurseurs de matières actives puis le sèchage et le traitement thermique du support ainsi imprégné.

Les matières actives sont le plus souvent à base de métaux précieux et la fabrication de tels convertisseurs est donc relativement coûteuse.

Aussi, des recherches ont été menées pour trouver des matières pouvant être substituées, partiellement ou totalement, aux catalyseurs à base de métaux précieux.

Il a ainsi été récemment décrit la fabrication de convertisseurs à base d'oxydes métalliques.

Le brevet US-A-5 290 530 décrit un épurateur de gaz d'échappement qui permet d'éliminer les particules solides contenues dans ces gaz d'échappement ainsi que les oxydes d'azote toxiques.

L'épurateur est formé d'un filtre poreux en particulier en cordiérite recouvert d'une couche de wash-coat en TiO₂ puis imprégné d'une phase catalytique par immersion dans une solution aqueuse de sels métalliques, des constituants catalytiques tels que carbonates, nitrates, acétates, hydroxydes, suivi d'un sèchage et d'un traitement thermique conduisant ainsi à la formation d'une couche d'oxydes métalliques.

Selon ce document, le catalyseur comprend essentiellement au moins un métal alcalin, des métaux de transition définis à savoir du cobalt et/ou manganèse et du vanadium, et au moins un élément des terres rares, dans des proportions définies.

Le document EP-A-0 225 595 décrit un catalyseur de combustion comprenant un support monolithique en nids d'abeille à base de silicates de type céramique et une phase active caractérisée par la combinaison d'oxydes de métaux de transition et d'oxydes d'éléments des terres rares.

Là encore, le catalyseur est obtenu par immersion dans une solution aqueuse contenant les constituants catalytiques sous forme de sels métalliques (nitrates) appropriés, du support muni d'un premier revêtement à base d'alumine enrichi en oxyde de lanthane (wash-coat).

Selon les auteurs,
- le couplage des oxydes d'éléments des terres rares et des oxydes de métaux de transition permet d'accroître le pouvoir réducteur du catalyseur et d'améliorer la vitesse de conversion des oxydes d'azote ;
- la présence d'oxyde de lanthane permet également d'accroître la stabilité du wash-coat d'alumine.

L'objectif de la présente invention est de fournir un procédé de fabrication de convertisseurs catalytiques à coût réduit permettant de s'affranchir, partiellement ou totalement, de la présence de métaux précieux.

Un autre objectif est encore de fournir un tel procédé permettant la fabrication de convertisseurs d'efficacité et de rapidité de convertsion améliorées.

L'invention a aussi pour objectif de fournir un procédé simplifié de fabrication de convertisseurs catalytiques à base d'oxyde(s) métallique(s), permettant d'obtenir des dépôts d'oxydes de qualité et en quantités relativement importantes.

A cet effet, l'invention a pour objet un procédé pour la fabrication d'un convertisseur catalytique des gaz d'échappement de véhicules automobiles du type comprenant le revêtement d'un support, par imprégnation, séchage et traitement thermique, avec au moins une couche contenant un ou plusieurs oxyde(s) métallique(s) actif(s), caractérisé en ce qu'il comprend :
- la préparation d'un milieu d'imprégnation comprenant au moins un précurseur d'oxyde métallique, dans un solvant contenant au moins un solvant organique ;
- l'imprégnation du support à l'aide du milieu d'imprégnation précité.

Selon d'autres caractéristiques de l'invention :
- le milieu d'imprégnation consiste en une solution comprenant au moins un précurseur d'oxyde ;
- le procédé comprend la préparation d'un milieu d'imprégnation contenant au moins un précurseur d'oxyde sous forme de particules, obtenu par précipitation à partir de la solution précitée.

L'invention concerne également un convertisseur catalytique du type comprenant un support muni d'au moins un revêtement formé d'au moins une couche contenant un ou plusieurs oxyde(s) métallique(s) actif(s) à base de métaux de transition, de métaux alcalin et/ou alcalino-terreux, et/ou de lanthanides, caractérisé en ce que le revêtement possède une surface spécifique comprise entre 0,1 et 300 m²/g, de préférence entre 0,5 et 50 m²/g.

Selon d'autres caractéristiques de l'invention :
- la porosité ouverte du revêtement est comprise entre 5 et 80 %, de préférence 30 et 50 %.
- la taille des particules d'oxydes du revêtement est comprise entre 10 nm et 30 µm.

Les caractéristiques et avantages du procédé selon l'invention sont décrits plus en détail ci-après.

Le support mis en oeuvre aux fins de l'invention peut être de tout type connu, notamment tel que disponible dans le commerce.

Le cas échéant, le procédé selon l'invention peut comprendre, en premier lieu, l'élaboration du support du convertisseur selon les méthodes connues dans la technique.

Le support peut consister en un support céramique ou métallique et présenter une structure de tout type connu. Le support peut être non poreux ou présenter une certaine porosité.

En outre, il est de préférence muni d'une couche d'interface de type wash-coat classique. Il s'agit avantageusement d'une couche à base d'alumine. Dans le cas d'un wash-coat le support a alors une certaine porosité.

Avant de procéder à son imprégnation, le support avec ou sans wash-coat, est traité thermiquement.

Dans le cas d'un support céramique, celui-ci est soumis à une température de l'ordre de 250°C pendant 5 à 10 heures puis refroidit et conservé dans un dessicateur jusqu'à la réalisation de l'opération d'imprégnation.

Dans le cas d'un support métallique, le traitement est opéré à une température plus élevée, généralement comprise entre 500 et 1200°C, pendant 2 heures.

La température dépend essentiellement de la nature de l'acier employé. Un acier de type FeCrAlloy sera par exemple traité entre 900 et 1000°C.

Le procédé selon l'invention comprend la préparation d'un milieu d'imprégnation puis l'imprégnation du support à l'aide dudit milieu.

Selon un premier mode de réalisation de l'invention, on prépare une solution contenant un ou plusieurs précurseurs d'oxydes métalliques qui conduiront, après sèchage et traitement thermique comme décrit ci-après, à un dépôt d'oxyde simple ou mixte ou encore d'un mélange de ces oxydes.

Les inventeurs ont découvert que le choix du couple solvant-précurseur(s) pour préparer le milieu d'imprégnation, était un facteur important dans l'obtention de dépôts d'oxydes de qualité, en particulier en quantité satisfaisante essentiellement du point de vue de l'efficacité de conversion et selon des couches homogènes et massives favorisant les échanges entre la surface et le coeur de celles-ci.

Le choix du solvant du milieu d'imprégnation est opéré en fonction de la nature du ou des précurseurs présent(s), en premier lieu de manière à ce qu'il(s) soi(ent) totalement solubilisé(s) dans le milieu.

Les inventeurs ont mis en évidence que la présence d'un solvant organique dans le milieu d'imprégnation permettait d'améliorer les propriétés de mouillabilité et conduisait à de meilleurs résultats, notamment du point de vue du séchage final du dépôt d'oxydes formé.

Ils ont ainsi montré que l'on pouvait avantageusement mettre en oeuvre des précurseurs possédant une faible solubilité dans l'eau.

Ceci va à l'encontre de l'état de la technique connu qui prévoit spécifiquement l'utilisation de précurseurs solubles dans l'eau et donc la préparation de milieux d'imprégnation aqueux.

Les précurseurs d'oxydes sont généralement des sels contenant un ou plusieurs cations métalliques. Il s'agit ainsi de précurseurs simples à base d'un anion et d'un cation ou de précurseurs mixtes à base d'un anion et de plusieurs cations différents.

La solution d'imprégnation peut contenir plusieurs types de précurseurs simples et/ou mixtes afin d'obtenir des oxydes mixtes.

Les sels sont avantageusement choisis parmi les nitrates, acétates, sulfates, chlorures et chlorates, les nitrates et les acétates étant préférés.

Le ou les cations présents dans les sels précités sont généralement choisis parmi les métaux de transition, les métaux alcalins et alcalino-terreux et les lanthanides.

Ils sont avantageusement choisis parmi les métaux suivants : chrome, manganèse, fer, cobalt, nickel, cuivre, titane, zinc, aluminium, silicium, gallium, molybdène, yttrium, potassium, calcium, étain, strontium, baryum et lanthane, et de préférence parmi les métaux de transition précités. Parmi ces métaux de transition, le cobalt, le chrome et le cuivre sont tout particulièrement préférés.

Par ailleurs, on choisi avantageusement des précurseurs pouvant être décomposés à température modérée afin d'obtenir des oxydes finement divisés.

Conformément à l'invention, le milieu d'imprégnation comprend au moins un solvant organique choisi parmi les alcools, les polyols, les cétones, les éthers.

Ces solvants peuvent être utilisés seuls ou en mélanges selon des proportions variées, qu'ils soient miscibles ou non entre eux.

De manière préférentielle, le solvant organique est choisi parmi le méthanol, l'éthanol, l'éthylène-glycol, l'acétone, le tétrahydrofuranne et les mélanges de ceux-ci.

Le milieu d'imprégnation peut consister en un mélange d'eau et d'au moins un solvant organique précité. Il contient avantageusement au moins 50 % en volume d'un solvant organique.

On préfère tout particulièrement des milieux anhydres ou des mélanges eau-alcools ou eau-acétone contenant moins de 30 % volumique d'eau.

Lorsque les précurseurs se présentent sous la forme de sels hydratés, ils peuvent être déshydratés avant mise en solution dans un solvant ou mélange de solvants anhydres.

Cette étape est alors réalisée selon les procédures classiques telles que par exemple sèchage thermique, déshydratation sous vide ou entraînement azéotropique par distillation avec un solvant approprié.

D'une manière générale, on procède à la dissolution du ou des précurseurs dans le milieu d'imprégnation sous agitation continue, à une température pouvant être comprise entre la température ambiante et la température d'ébullition du milieu d'imprégnation.

En outre, on prévoit avantageusement une concentration en précurseur(s) la plus proche possible de la saturation de la solution, compte tenu par ailleurs de la température à la quelle la dissolution est réalisée.

L'imprégnation du support est effectuée après dissolution totale du ou des sels dans le milieu.

Selon un second mode de réalisation de l'invention, on prépare un milieu d'imprégnation contenant un ou plusieurs précurseurs d'oxydes sous forme de particules, appelé gel d'imprégnation.

Selon ce mode de réalisation, pour élaborer le gel d'imprégnation, on forme par précipitation un précurseur conditionnant la forme et la taille des particules d'oxyde, comprenant au moins un composé simple, à base d'un anion et d'un cation, ou mixte, à base d'un anion et de plusieurs cations différents, et on traite thermiquement le précurseur pour former la poudre d'oxyde comprenant ainsi au moins un oxyde simple ou mixte.

Les particules de précurseur(s) d'oxyde(s) peuvent être obtenues par précipitation à partir d'une solution de sels métalliques telle que décrite précédemment, la précipitation pouvant avoir lieu en présence ou non du support dans le milieu.

Pour ce faire, on ajoute à une solution de sels métalliques tels que décrite ci-dessus, un agent précipitant acide ou basique qui permet la précipitation dans le milieu de fines particules de précurseur(s).

Il peut s'agir d'un acide organique tel que l'acide oxalique ou l'acide citrique, d'un sel d'ammonium tel que l'oxalate ou le carbonate d'ammonium, de soude, de potasse, d'ammoniaque ou d'une base organique.

L'agent précipitant consiste avantageusement en de l'ammoniaque ou de la triéthylamine, de l'acide oxalique ou de l'oxalate d'ammonium ou encore du carbonate d'ammonium.

Ces agents précipitant conduisent respectivement, à des précurseurs précipités sous forme d'hydroxydes, d'oxalates simples ou mixtes, de carbonates simples ou mixtes.

L'agent précipitant se présente avantageusement sous forme d'une seconde solution d'un des composés précités dans l'eau et/ou un solvant organique tel qu'un alcool ou un polyol ou un mélange de ceux-ci. Pour l'acide oxalique par exemple, on préfère un solvant alcoolique.

Le ou les précurseurs sont formés par addition des deux solutions distinctes contenant chacune au moins un réactif mélangé à un solvant, le réactif de la première solution étant choisi parmi des sels de métaux de transition, de métaux alcalins et alcalino-terreux et de lanthanides tels que précités dans le premier mode de réalisation de l'invention, et le réactif de la seconde solution étant l'agent précipitant.

La quantité de solvant est ajustée afin d'obtenir, le cas échéant, la dissolution totale des sels de départ dans la solution initiale.

Pour la seconde solution, on choisit avantageusement la quantité de solvant la plus faible possible (proche de la limite de solubilité de l'agent précipitant).

Chaque solution peut éventuellement être légèrement acidifiée notamment pour améliorer la dissolution des sels de départ.

La quantité d'agent précipitant est ajustée de préférence de manière à obtenir un pH compris entre 9 et 11 pour la précipitation d'hydroxydes ou, dans les autres cas, de manière à être en léger excès par rapport à la quantité théorique nécessaire à la précipitation de la totalité des cations en solution.

On procède à la précipitation en ajoutant les solutions l'une à l'autre à température ambiante. Dans certains cas, les solutions peuvent être chauffées à une température comprise entre 20 et 60°C, pour améliorer la dissolution des sels de départ ou pour augmenter la vitesse de précipitation lors de l'addition des deux solutions.

De préférence, on contrôle l'addition d'une solution à l'autre, au moyen d'une pompe péristaltique dont le débit est réglé entre 1 et 1000 ml/mn.

En variante, l'addition des solutions peut être quasiment instantanée en versant rapidement une solution dans l'autre.

On préfère maintenir le milieu sous agitation depuis l'étape initiale de dissolution des sels jusqu'à l'obtention du milieu d'imprégnation proprement dit (gel) après addition de l'agent précipitant. On poursuit avantageusement l'agitation, par exemple pendant 1 à 30 minutes, de préférence 5 à 15 minutes.

Les quantités de sels respectifs de départ sont calculées de manière à obtenir, de préférence, une concentration en précipité comprise entre 0,2 et 2 moles/litre, plus préférentiellement encore entre 0,4 et 1 mole/litre.

La concentration des sels et de l'agent de précipitation ainsi que la vitesse d'addition de l'un à l'autre peuvent conditionner la taille des particules.

Par exemple, des particules de 10 µm sont obtenues par précipitation à partir de nitrate de cobalt en solution à 0,1 mole/litre, par de l'acide oxalique selon une concentration de 0,1 mole/litre également. Dans les mêmes conditions, des solutions molaires conduisent à l'obtention de particules de 0,1-0,2 µm, leur forme étant aciculaire dans les deux cas.

La forme des particules est, quant à elle, principalement conditionnée par la nature des solvants, des précurseurs et de l'agent de précipitation.

Par comparaison à l'exemple donné ci-dessus où les particules formées sont aciculaires, la précipitation à partir de nitrate de cobalt en solution molaire par de la triéthylamine, dans les mêmes conditions, conduit à la formation de particules sphériques.

Ce second mode de réalisation est avantageux en ce que l'on forme par précipitation un précurseur pouvant conditionner la forme et la taille des particules d'oxyde métallique.

Selon une variante de réalisation, on procède à des dépôts mixtes par incorporation de particules d'oxyde(s) métallique(s) actif(s) préalablement formé(s) par ailleurs, dans le milieu d'imprégnation contenant déjà un ou plusieurs précurseur(s) solubilisé(s) ou précipité(s) comme décrit précédemment.

Lorsque le milieu d'imprégnation est prêt, on procède à l'imprégnation du support éventuellement muni au préalable d'un "wash-coat".

Cette étape d'imprégnation peut être réalisée par immersion du support dans le milieu d'imprégnation (solution, gel ou suspension) pendant une durée allant de quelques secondes à une heure, de préférence de 30 secondes à deux minutes.

Le milieu d'imprégnation est éventuellement agité pendant l'immersion du support.

Il peut par ailleurs être légèrement chauffé, notamment dans le cas de précurseurs solubilisés, par exemple à une température comprise entre 40 et 80°C selon le solvant employé pour la préparation de ce milieu.

Dans le cas d'un milieu d'imprégnation anhydre, la solution peut êre introduite dans un récipient contenant le support à imprégner, sur lequel on adapte un réfrigérant dont la sortie est relié à un élément déhydratant tel qu'une colonne contenant du chlorure de calcium anhydre.

On réalise alors l'imprégnation en portant au reflux le milieu d'imprégnation. Le support est ensuite séché en étuve.

Selon un autre mode de mise en oeuvre de l'invention, le support est imprégné par un ou plusieurs arrosages successifs de celui-ci avec le milieu d'imprégnation.

La partie du milieu d'imprégnation non absorbée par le support est récupérée pour procéder à l'arrosage suivant jusqu'à absorption totale du milieu.

Dans ce cas, on peut employer 100 à 500 cm³ de milieu d'imprégnation par litre (volume apparent) de support.

Dans le cas de précurseurs sous forme de particules (précipités), on peut procéder à l'imprégnation par précipitation des précurseurs directement dans le milieu contenant le support.

Après dépôt, le support imprégné est sèché en étuve à une température comprise entre 50 et 150°C pendant une durée comprise entre 0,5 et 3 heures, de préférence 1 heure.

On élimine éventuellement l'excès de dépôt faiblement adhérent par soufflage avant ou après l'étape de sèchage ci-dessus.

On procède finalement au traitement thermique du support imprégné et séché pour former le ou les oxyde(s) métallique(s) actif(s) du convertisseur catalytique, à partir du ou des précurseurs préalablement déposés.

Le traitement est effectué à une température comprise entre 300 et 1000°C selon la nature du ou des oxydes déposé(s).

La température est comprise de préférence entre 500 et 700°C.

Selon l'invention, on peut prévoir des vitesses de montée en température variables au cours du cycle de traitement thermique.

Généralement, on applique des vitesses de montée en température faibles, de l'ordre de 10 à 50°C/heure, jusqu'à 200-300°C, température à laquelle on procède à un palier pendant 0 à 2 heures, puis on augmente la vitesse de montée en température à 100°C/heure jusqu'à la température de traitement où le convertisseur est maintenu pendant 0 à 3 heures.

Selon une autre variante de réalisation de l'invention, on procède à des dépôts multi-couches par plusieurs imprégnations consécutives.

Dans ce cas, le ou les précurseur(s) et les particules d'oxyde(s) déjà formé(s), peuvent être identiques ou différents pour chaque imprégnation.

En outre, chaque imprégnation peut être effectuée, de manière indépendante, à l'aide d'un milieu d'imprégnation de type identique ou différent c'est-à-dire du type contenant des précurseurs solubles avec ou sans particules d'oxyde(s) préformé(s) ou du type contenant des précurseurs précipités avec ou sans particules d'oxyde(s) préformé(s).

Chaque imprégnation est effectuée soit après sèchage soit après traitement thermique de la couche précédente de la manière indiquée ci-dessus.

Ainsi, on peut suivre les séquences suivantes :
Imprégnation - sèchage - traitement thermique - imprégnation - sèchage - traitement thermique - ... etc.
Imprégnation - sèchage - imprégnation - sèchage - ...etc...avec un seul traitement thermique final.

Quelle que soit la séquence appliquée, la dernière étape du procédé selon l'invention est toujours un traitement thermique.

Le dépôt d'oxyde(s) obtenu après traitement thermique possède une surface spécifique comprise entre 0,1 et 300 m²/g, de préférence entre 0,5 et 50 m²/g.

La porosité ouverte est comprise entre 5 et 80 %, de préférence entre 30 et 50 %.

La taille moyenne des pores et des particules d'oxydes est comprise entre 10 nm et 30 µm.

Celle-ci est bien adaptée pour le traitement des gaz d'échappement d'un véhicule automobile.

La teneur en oxydes du produit final est avantageusement de 5 à 30 % de la masse totale du catalyseur, selon le nombre d'imprégnation successives effectuées. En pratique une seule imprégnation peut conduire à des taux d'oxydes de 7 à 10 % et deux imprégnations permettent d'obtenir des taux de 12 à 18 % d'oxydes.

Selon un autre mode de mise en oeuvre de l'invention, un ou plusieurs métaux précieux peuvent avantageusement être incorporés au(x) dépôt(s) d'oxyde(s) métallique(s) précités.

Les métaux sont préférentiellement choisis parmi le platine, le rhodium, le paladium, l'or et l'argent ou leurs mélanges.

Un mélange Pt/Rh avec un rapport massique compris entre 2 et 10, mieux entre 5 et 8 est tout particulièrement préféré.

Les précurseurs les plus classiquement employés sont l'acide chloroplatinique, le nitrate tétramine de platine, l'ammonium tétrachloroplatine, le nitrate de rhodium et le chlorure aurique.

Cette addition peut être effectuée à différentes étapes du procédé selon l'invention, selon des procédures variées comme par exemple les procédures exposées ci-après.

On introduit un ou plusieurs précurseur(s) de métaux précieux dans le milieu d'imprégnation formé d'un type décrit précédemment (solution ou gel contenant éventuellement des particules d'oxyde(s) préformé(s)).

Selon une autre procédure, on prépare une solution aqueuse d'un ou plusieurs précurseurs de métaux précieux en vue d'une imprégnation subséquente au(x) dépôt(s) d'oxyde(s) métallique(s) (métaux non précieux) selon les étapes décrites précédemment.

On ajuste de préférence la concentration massique de la solution à 0,2 à 3 g/l.

Quelle que soit la procédure choisie, on procède de préférence de manière à obtenir, dans le catalyseur final, de 0,1 à 1 gramme de métal précieux par litre de support.

Selon les cas, les précurseurs de métaux précieux sont déposés soit en même temps que les précurseurs d'oxydes soit après dépôts de(s) couche(s) de précurseur(s) d'oxyde(s).

Pour le platine, le rhodium ou le paladium, on introduit avantageusement ces métaux en fin de procédé c'est-à-dire après dépôt de la dernière couche d'oxydes ou de précurseur(s) d'oxyde(s) ou simultanément avec la dernière ou les deux dernières couches précitées.

Pour l'or et l'argent, on choisit préférentiellement de les introduire avec les précurseurs ou les oxydes, quel que soit le nombre de couches déposées.

Après séchage et traitement thermique pour les dépôts simultanés aux précurseurs d'oxydes ou oxydes, dans les conditions décrites ci-dessus, on procède éventuellement à un traitement thermique supplémentaire à une température comprise entre 200 et 500°C de préférence 300°C sous une atmosphère contenant 5 à 20% d'hydrogène et 5 à 20 % de vapeur d'eau.

Le convertisseur obtenu selon le procédé de l'invention peut être avantageusement intégré dans un élément de ligne d'échappement pour véhicule automobile.

Typiquement les conditions d'utilisation comprennent une vitesse spatiale horaire de 50.10³ à 100.10³ h⁻¹.

L'invention sera décrite plus en détail à l'aide des exemples suivants donnés à titre illustratif mais non limitatif.

### EXEMPLES

### Exemple 1

Une solution destinée à imprégner un support de catalyseur est préparée de la façon suivante :
2,65 moles de nitrate de cobalt sont dissoutes dans 1 litre d'acétone, sous agitation mécanique.

Lorsque le sel est totalement dissous, on immerge pendant 1 min un support de catalyseur céramique recouvert d'un wash-coat classique à base d'alumine, préalablement traité à 250°C pendant 5 h et conservé à l'abri de l'humidité.

Le support imprégné est soumis à un courant d'air comprimé pour éliminer l'excès de solution, puis séché à 100°C pendant une heure.

On le traite finalement à 500°C avec un cycle thermique tel qu'indiqué ci-après : 50°C/h jusqu'à 200°C, avec maintien pendant 1 h, puis 100°C/h jusqu'à 500°C, maintenus pendant 2 h.

La prise de masse constatée est de 8 % de la masse initiale du support, et le produit actif final obtenu est Co₃O₄.

### Exemple 2

Même procédé que pour l'exemple 1, sauf que le nitrate de cobalt est dissous dans un mélange équivolumique eau-acétone, à raison de 3,4 moles. l⁻¹.

### Exemple 3

Même procédé que pour l'exemple 1, sauf que le nitrate de cobalt est dissous dans de l'eau désionisée, à raison de 3,44 moles.l⁻¹.

### Exemple 4

Même procédé que pour l'exemple 1, sauf que 4,1 moles de nitrate de cobalt sont préalablement deshydratés par entraînement azéotropique en utilisant de l'éthanol comme solvant. Le nitrate de cobalt anhydre est ensuite dissous dans l'éthanol pour obtenir une solution à 4,1 moles. l⁻¹.

### Exemple 5

Même procédé que pour l'exemple 4, sauf que le nitrate de cobalt est dissous dans du méthanol, à raison de 4,15 moles. l⁻¹.

### Exemple 6

Même procédé que pour l'exemple 1, sauf que le nitrate de cobalt est dissous dans de l'éthanol à 95 %, à raison de 4,15 moles. l⁻¹**.**

### Exemple 7

Même procédé que pour l'exemple 1, sauf que le sel de départ est du chlorure de cobalt, dissous à raison de 2,5 moles. l⁻¹.

### Exemple 8

Même procédé que pour l'exemple 6, sauf que le sel de départ est du chlorure de cobalt, dissous à raison de 4,15 moles. l⁻¹.

### Exemple 9

Même procédé que pour l'exemple 1, sauf que le sel de départ est du nitrate de cuivre, dissous à raison de 4,15 moles. l⁻¹, dans un mélange eau-éthanol avec un rapport eau/(éthanol + eau) compris entre 0 et 1.

### Exemple 10

Même procédé que pour l'exemple 9, sauf que le sel de départ est du nitrate de cuivre, dissous à raison de 2,65 + {4,12/2,65 x R} mole.l⁻¹, dans un mélange eau-acétone avec un rapport R eau/(acétone + eau) compris entre 0 et 1.

### Exemple 11

Même procédé que pour l'exemple 9 ou 10, sauf que le nitrate de cuivre est substitué par du nitrate ou du chlorure de Cu, Co, et/ou Cr, Fe, Mn, Ni, Ti, Al, Si, Mg, Ca, Ba, Sr, Zn.

### Exemple 12

Même procédé que pour les exemples 1 à 11, sauf qu'après formation de l'oxyde final, on procède à de nouvelles imprégnation ainsi qu'aux opérations suivantes décrites à l'exemple 1, le nombre de séquence étant compris entre 1 et 5.

### Exemple 13

Même procédé que pour l'exemple 12, sauf que les traitements thermiques intermédiaires (entre 2 imprégnations) et final sont fait à 700°C, dans les mêmes conditions que décrites à l'exemple 1.

### Exemple 14

Même procédé que pour les exemples 12 ou 13, sauf que le support employé est un support métallique de type FeCrAlloy, tel qu'on peut l'obtenir dans le commerce.

### Exemple 15

Un gel destiné à imprégner un support de catalyseur est préparé de la façon suivante :
1 mole de nitrate de cobalt est dissoute dans 1 litre de solution équivolumique eau-acétone, sous agitation mécanique.

Lorsque le sel est totalement dissous, on ajoute à la solution de la triéthylamine, en quantité nécessaire pour obtenir un pH de 10. Après précipitation de l'hydroxyde de cobalt, on maintient l'agitation pendant 15 minutes.

On immerge ensuite pendant 1 minute un support de catalyseur céramique recouvert d'un wash-coat classique à base d'alumine, préalablement traité à 250°C pendant 5 h et conservé à l'abri de l'humidité.

Le support imprégné est soumis à un courant d'air comprimé pour éliminer l'excès de gel, puis séché à 100°C pendant une heure.

On le traite finalement à 500°C avec un cycle thermique tel qu'indiqué ci-après : 50°C/h jusqu'à 200°C, avec maintien pendant 1 h, puis 100°C/h jusqu'à 500°C, maintenus pendant 2 h.

La phase obtenue après traitement thermique est Co₃O₄, les particules sont de forme polyédrique ou pseudo-sphérique de taille moyenne 0,05 µ, de surface spécifique d'environ 20 m²/g. La taille des pores est de 0,05 µ également et la porosité de la couche est comprise entre 30 et 50 %.

### Exemple 16

Même procédé que pour l'exemple 15, sauf qu'on remplace la triéthylamine par de l'ammoniaque.

Le revêtement formé présente les mêmes caractéristiques qu'à l'exemple 15.

### Exemple 17

Même procédé que pour l'exemple 15, sauf que le gel est préparé de la façon suivante :
0,4 mole de nitrate de cobalt est dissous dans 1 litre d'une solution équivolumique eau-acétone, sous agitation mécanique. Lorsque le sel est totalement dissous, on ajoute à la solution une autre solution contenant 0,5 mole de carbonate d'ammonium dissous dans 0,3 litre d'eau.

La phase obtenue est Co₃O₄, les particules sont de forme polyédrique ou pseudo-sphérique de taille moyenne 1 µ, de surface spécifique d'environ 5-10 m²/g. La taille des pores est de 0,05 à 1 µ et la porosité de la couche est comprise entre 30 et 50 %.

### Exemple 18

Même procédé que pour l'exemple 15, sauf que le gel est préparé de la façon suivante :
0,6 mole de nitrate de cobalt est dissous dans 1 Titre d'une solution équivolumique eau-acétone, sous agitation mécanique. Lorsque le sel est totalement dissous, on ajoute à la solution une autre solution contenant 0,7 mole d'acide oxalique dissous dans 0,4 litre d'eau.

La phase obtenue est Co₃O₄, les particules sont de forme aciculaire de taille moyenne 0,2 µ, de surface spécifique d'environ 20 m²/g. La taille des pores est de 0,05 à 0,2 µ et la porosité de la couche est de 40 %.

### Exemple 19

Même procédé que pour les exemple 15 à 18 sauf que le nitrate de cobalt est substitué par du nitrate ou du chlorure de Cu, Co, et/ou Cr, Fe, Mn, Ni, Ti, Al, Si, Mg, Ca, Ba, Sr, Zn ou par un mélange de ces mêmes sels.

Les caractéristiques sont les mêmes que celles définies aux exemples précédents sauf pour les phases obtenues qui sont du type Aₓ O_{y}, A représentant un ou plusieurs des cations, x et y dépendant de leur(s) état(s) d'oxydation, par exemple, Co₂CuO₄, Co₂MnO₄, Cr₂O₃, Fe₂O₃, ou CoFeMnO₄, etc.

### Exemple 20

Même procédé que pour les exemples 15 et 19, sauf qu'après formation de l'oxyde final, on procède à de nouvelles imprégnations ainsi qu'aux opérations suivantes décrites à l'exemple 15, le nombre de séquences étant compris entre 1 et 5.

### Exemple 21

Même procédé que pour l'exemple 20, sauf que les traitements thermiques intermédiaires (entre 2 imprégnations) et final sont fait à 700°C, dans les mêmes conditions que décrites à l'exemple 15.

### Exemple 22

Même procédé que pour les exemples 12 ou 13, sauf que le support employé est un support métallique de type FeCrAlloy, tel qu'on peut l'obtenir dans le commerce.

### Exemple 23

Un catalyseur obtenu par une des méthodes décrites ci-dessus est imprégné par une solution préparée de la façon suivante :
De l'acide chloroplatinique est dissous dans de l'eau désionisée, à raison de 8,5 g/l et maintenu sous agitation pendant 10 minutes après dissolution complète du sel.

Le catalyseur est immergé dans cette solution pendant 1 minute, puis séché à 100°C pendant 1 heure et traité thermiquement pendant 3 heures à 500°C, avec une vitesse de montée en température de 100°C/h.

### Exemple 24

Même procédé que pour l'exemple 23, sauf que le traitement thermique est fait dans les conditions suivantes :
Après séchage, dans les mêmes conditions que celles décrites ci-dessus, on procède à un traitement thermique à 300°C, maintenu pendant 5 h, sous une atmosphère contenant 5 % de H₂, et 5% de vapeur d'eau, et avec un débit gazeux de 6 l/h.

### Exemple 25

Même procédé que pour l'exemple 23 ou 24, sauf que la solution contient du Pt et du Rh avec un rapport Rh/Pt de 1/7, et une concentration totale telle qu'on ait 4,2 g/l de métal en solution.

### Exemple 26

Le catalyseur est préparé suivant une des procédures décrites aux exemples 1 à 22, sauf qu'à la solution on ajoute de l'acide choroaurique, avec une concentration en Au de 2 g/l.

### ACTIVITES CATALYTIQUES

### Méthodes d'analyses.

Pour analyser les performances des catalyseurs, deux méthodes différentes ont été employées :
1) l'échantillon, de diamètre 25,4 mm (1 pouce) et de longueur 50,8 mm (2 pouces), est introduit dans une chambre d'analyse balayée par un gaz,
- le mélange gazeux est constitué de propène, CO, NO, oxygène, et azote comme gaz porteur. Il est également ajouté de la vapeur d'eau et du CO₂ qui sont des éléments présents dans un gaz d'échappement réel,
- le mélange gazeux est chauffé en amont du catalyseur,
- la méthode d'analyse est la spectrométrie infrarouge à transformé de Fourier,
- la mesure de température est faite à la surface du catalyseur.

La composition typique du gaz est la suivante : 250 ppm de CO, 500 ppm de NO, 10 % de CO₂, 250 ppm de propène, 2,5 % d'oxygène et 10 % H₂O. Le débit normal est de 30 l/mn.
La procédure consiste à mesurer les différents taux de conversion TC% de HC, TC% de CO, TC% de NOx, de manière continue, pour des températures évoluant entre 100 et 500°C environ.
Les résultats sont regroupés dans le tableau 1 suivant, où :
HC, CO, et NOx représentent respectivement le propène, le monoxyde de carbone et les oxydes d'azote,
TC représente le taux de conversion à 300°C,
T représente la température de début de conversion.

**Tableau 1**

| Types de catalyseurs | CO | | HC | | NOx | |
|---|---|---|---|---|---|---|
| | TC % | T | TC % | T | TC % | T |
| Ex 1 | 88 | 200 | 35 | 250 | 5 | 280 |
| Ex 4, 2 couches (Ex 12) | 90 | 180 | 40 | 250 | 8 | 220 |
| Ex 4, 3 couches (Ex 12) | 90 | 180 | 60 | 230 | 28 | 220 |
| Ex 10, Zn/Co:0,2 2 couches(Ex 12) | 100 | 150 | 72 | 220 | 10 | 290 |
| Ex 10, Cu/Co=0.1 | 100 à 280°C | 150 | 22 | 270 | 0 | - |
| Ex 11, Cr/Co=0,333 | 40 | 240 | 35 | 200 | 15 | 280 |
| Ex 4 + Ex 26 | 100 à 260°C | 200 | 55 | 210 | 15 | 260 |
| Ex 4 + Ex 23 | 100 à 180°C | 60 | 72 | 200 | 20 | 230 |

2) Une deuxième méthode consiste à tester des échantillons de diamètre 6,35 mm (1/4 pouce) et longueur 12,7 mm (1/2 pouce) avec différents mélanges gazeux :
- soit 2 % d'éthane, 8 % d'oxygène et 90 % d'azote, pour évaluer les performances des catalyseurs vis-à-vis de l'oxydation des hydrocarbures,
- soit 2 % NO, 2 % CO et 96 % azote pour évaluer les performances des catalyseurs vis-à-vis de la réduction des NOx.

Le reste des conditions d'analyse est identique à la première méthode, sauf en ce qui concerne la température qui reste fixe, à 300°C.
Les résultats obtenus par cette seconde méthode d'analyse sont regroupés dans le tableau 2 suivant :

**Tableau 2**

| | | TC % | |
|---|---|---|---|
| Types de catalyseurs | Solvant | HC | NOx |
| EX1 | Acétone | 25 | 70 |
| EX3 | Eau | 11 | 50 |
| EX4 | Ethanol | 15 | 50 |

## Revendications

1. Procédé pour la fabrication d'un convertisseur catalytique de gaz d'échappement de véhicules automobiles du type comprenant le revêtement d'un support, par ;imprégnation, séchage et traitement thermique, avec au moins une couche contenant un ou plusieurs oxyde(s) métallique(s) actif(s), caractérisé en ce qu'il comprend :
- la préparation d'un milieu d'imprégnation comprenant au moins un précurseur d'oxyde métallique dans un solvant contenant au moins un solvant organique ;
- l'imprégnation du support à l'aide du milieu d'imprégnation précité.

2. Procédé selon la revendication 1, caractérisé en ce que le milieu d'imprégnation consiste en une solution comprenant au moins un précurseur d'oxyde.

3. Procédé selon l'une quelconque des revendications 1 ou 2, caractérisé en ce que le solvant organique est choisi parmi les alcools, les polyols, les cétones, les éthers et les mélanges de ceux-ci.

4. Procédé selon l'une quelconque des revendications précédentes, caractérisé en ce que le solvant est choisi parmi le méthanol, l'éthanol, l'éthylène-glycol, l'acétone, le tétrahydrofuranne et les mélanges de ceux-ci.

5. Procédé selon l'une quelconque des revendications précédentes, caractérisé en ce que le solvant est constitué d'un mélange eau-alcool ou eau-acétone.

6. Procédé selon l'une quelconque des revendications précédentes, caractérisé en ce que le solvant contient au moins 50 % en volume, et de préférence entre 70 et 100 %, d'un solvant organique.

7. Procédé selon l'une quelconque des revendications précédentes, caractérisé en ce que le milieu d'imprégnation est anhydre.

8. Procédé selon l'une quelconque des revendications précédentes, caractérisé en ce que le précurseur d'oxyde est un sel d'au moins un métal choisi parmi le chrome, manganèse, fer, cobalt, nickel, cuivre, titane, zinc, aluminium, silicium, gallium, molybdène, yttrium, potassium, calcium, étain, strontium, baryum et lanthane, de préférence parmi les métaux de transition précités.

9. Procédé selon l'une quelconque des revendications précédentes, caractérisé en ce que le précurseur d'oxyde est un sel d'au moins un métal, qui est choisi parmi les nitrates, acétates, sulfates, chlorures et chlorates, de préférence parmi les nitrates et acétates.

10. Procédé selon l'une quelconque des revendications 7 à 9, caractérisé en ce que le ou les sels précurseurs sont deshydratés préalablement à leur mise en solution.

11. Procédé selon l'une quelconque des revendications précédentes, caractérisé en ce que la concentration du ou des précurseurs correspond sensiblement à la saturation de la solution.

12. Procédé selon l'une quelconque des revendications précédentes, caractérisé en ce qu'il comprend la préparation d'un milieu d'imprégnation contenant au moins un précurseur d'oxyde sous forme de particules, obtenu par précipitation à partir d'une solution selon l'une quelconque des revendications 2 à 10.

13. Procédé selon la revendication 12, caractérisé en ce que pour précipiter le (les) précurseur(s), on ajoute un agent acide ou basique dans le milieu d'imprégnation.

14. Procédé selon la revendication 12 ou 13, caractérisé en ce que l'agent de précipitation est choisi parmi l'acide oxalique, l'acide citrique, l'oxalate d'ammonium, le carbonate d'ammonium, la soude, la potasse, l'ammoniaque, et les bases organiques, de préférence parmi l'ammoniaque, la triéthylamine, l'acide oxalique, l'oxalate d'ammonium et le carbonate d'ammonium.

15. Procédé selon l'une quelconque des revendications 12 à 14, caractérisé en ce que l'agent de précipitation est sous forme d'une solution dans l'eau et/ou un solvant organique ou mélange de solvants choisi(s) parmi les alcools et les polyols.

16. Procédé selon la revendication 15, caractérisé en ce que les solutions de sels métalliques et d'agent précipitant sont ajoutées l'une à l'autre.

17. Procédé selon la revendication 16, caractérisé en ce que les solutions de sels métalliques et d'agent précipitant sont ajoutées l'une à l'autre à température ambiante.

18. Procédé selon l'une quelconque des revendications 16 et 17, caractérisé en ce que l'on contrôle l'addition d'une solution à l'autre au moyen d'une pompe péristaltique dont le débit est compris entre 1 et 1 000 ml/mn.

19. Procédé selon l'une des revendication 12 à 18, caractérisé en ce que la quantité d'agent précipitant est telle que le pH de la solution est compris entre 9 et 11 pour la précipitation d'hydroxydes ou est en leger excès par rapport à la quantité théorique nécessaire à la précipitation de la totalité des cations en solution.

20. Procédé selon l'une quelconque des revendications 12 à 19, caractérisé en ce que la concentration en précipité de précurseur(s) est comprise entre 0,2 et 2 moles/litre, de préférence entre 0,4 et 1 mole /litre.

21. Procédé selon l'une quelconque des revendications précédentes, caractérisé en ce que le milieu d'imprégnation comprend des particules d'un ou plusieurs oxyde(s) métallique(s) préalablement formé(s).

22. Procédé selon l'une quelconque des revendications précédentes, caractérisé en ce que le support, éventuellement muni d'un "wash-coat", est imprégné par immersion dans le milieu d' imprégnation pendant un temps compris entre quelques secondes et une heure, de préférence entre 30 secondes et 2 minutes.

23. Procédé selon l'une quelconques des revendications précédentes, caractérisé en ce que le support est imprégné par un ou plusieurs arrosages successifs avec le milieu d'imprégnation.

24. Procédé selon l'une quelconque des revendications 12 à 23, caractérisé en ce que le support, éventuellement muni d'un wash-coat, est imprégné par précipitation des précurseur(s) dans le milieu contenant le support.

25. Procédé selon l'une quelconque des revendications précédentes, caractérisé en ce que l'on introduit un ou plusieurs précurseurs de métaux précieux dans le milieu d'imprégnation.

26. Procédé selon l'une quelconque des revendications 1 à 24, caractérisé en ce qu'il comprend en outre la préparation d'une solution contenant un ou plusieurs métaux précieux et en ce que l'on imprègne le support muni d'au moins une couche d'oxyde(s) métallique(s) tel qu'obtenu selon l'une quelconque des revendications 1 à 24.

27. Procédé selon la revendication 25 ou 26, caractérisé en ce que le précurseur contient au moins un métal choisi parmi le platine, le rhodium, le paladium, l'or et l'argent, de préférence choisi parmi le platine et le rhodium.

28. Procédé selon l'une quelconque des revendications précédentes, caractérisé en ce que l'on traite le support imprégné et séché à une température comprise entre 300 et 1000°C, de préférence entre 500 et 700°C en appliquant une vitesse de montée en température de l'ordre de 10 à 50°C/heure jusqu'à 200-300°C, température à laquelle on procède à un palier pendant 0 à 2 heures, puis en augmentant la vitesse de montée en température à 100°C/heure jusqu'à la température de traitement où le convertisseur est maintenu pendant 0 à 3 heures.

29. Procédé selon l'une quelconque des revendications précédentes, caractérisé en ce que l'on réalise plusieurs imprégnations successives sur un même support.

30. Procédé selon l'une quelconque des revendications précédentes caractérisé en ce qu'on utilise une solution d'imprégnation contenant plusieurs types de précurseurs simples et/ou mixtes afin d'obtenir une couche d'oxydes mixtes.

31. Elément de ligne d'échappement pour véhicule automobile, caractérisé en ce qu'il comprend un convertisseur catalytique tel qu'obtenu par le procédé selon l'une quelconque des revendications 1 à 30.

32. Convertisseur catalytique du type comprenant un support muni d'au moins un revêtement formé d'au moins une couche contenant un ou plusieurs oxyde(s) métallique(s) actif(s) à base de métaux de transition, de métaux alcalin et/ou alcalino-terreux, et/ou de lanthanides, caractérisé en ce que le revêtement possède une surface spécifique comprise entre 0,1 et 300 m²/g, de préférence entre 0,5 et 50 m²/g.

33. Convertisseur selon la revendication 32, caractérisé en ce que la porosité ouverte du revêtement est comprise entre 5 et 80 %, de préférence 30 et 50 %.

34. Convertisseur selon l'une quelconque des revendications 32 et 33, caractérisé en ce que la taille des particules d'oxydes du revêtement est comprise entre 10 nm et 30 µm.
